Europäisches Patentamt

European Patent Office

Office européen des brevets

(19)

(11) Veröffentlichungsnummer: **0 075 259 B1**

(12) **EUROPÄISCHE PATENTSCHRIFT**

(45) Veröffentlichungstag der Patentschrift:
14.08.85

(51) Int. Cl.⁴: **B 60 R 1/06**

(21) Anmeldenummer: 82108482.9

(22) Anmeldetag: 15.09.82

(54) Vorrichtung zum Verstellen eines an einem Kraftfahrzeug schwenkbar gelagerten Elements.

(30) Priorität: 23.09.81 DE 3137780

(43) Veröffentlichungstag der Anmeldung:
30.03.83 Patentblatt 83/13

(45) Bekanntmachung des Hinweises auf die Patenterteilung:
14.08.85 Patentblatt 85/33

(84) Benannte Vertragsstaaten:
DE FR IT SE

(56) Entgegenhaltungen:
DE - A - 2 357 543
DE - A - 2 615 645
DE - A - 2 628 720

(73) Patentinhaber: ROBERT BOSCH GMBH, Postfach 50,
D-7000 Stuttgart 1 (DE)

(72) Erfinder: Dilger, Werner, Gutenbergstrasse 1,
D-7580 Bühl (DE)

ACTORUM AG

## Beschreibung

Die Erfindung geht aus von einer Vorrichtung nach der Gattung des Hauptanspruchs. Es ist schon eine solche Vorrichtung vorgeschlagen worden (DE-A Nr. 2615645), bei der die Zwangsführung durch eine aufwendige Stiftanordnung realisiert ist. Der Spiegelträger kann dann nur um die Längsachse eines Stiftes geschwenkt oder gegenüber dem Stift durch ein Schneidenlager gekippt werden. Dabei ist eine saubere, spielfreie Abstützung des Stifts an einem einem gestellfesten Gehäuse gehörenden Lagerbock Voraussetzung für eine spielfreie Spiegeleinstellung, die auch bei Fahrerschütterungen in der eingestellten Position bleibt.

Bei einer anderen, bekannten Stellvorrichtung (DE-A Nr. 2628720) ist die einwandfreie Einstellung des Rückspiegels auf die Kriterien des jeweiligen Benutzers schwierig, weil die Einstellbewegungen ungeführt als sogenannte "Rührbewegungen" ausgeführt werden können und in der Praxis auch ausgeführt werden.

Die erfindungsgemässe Stellvorrichtung mit den kennzeichnenden Merkmalen des Hauptanspruchs hat demgegenüber den Vorteil, dass die Zwangsführung in das Kugelgelenk integriert ist und somit keine räumlichen Anforderungen stellt. Auch sind keine besonderen Anpassungen von gestellfesten Gehäuseteilen zur Verwirklichung der Zwangsführung erforderlich.

Durch die in den Unteransprüchen aufgeführten Massnahmen sind vorteilhafte Weiterbildungen und Verbesserungen der im Hauptanspruch angegebenen Stellvorrichtung möglich.

Ein Ausführungsbeispiel der Erfindung ist in der Zeichnung dargestellt und in der nachfolgenden Beschreibung näher erläutert. Es zeigen:

Fig. 1 einen Schnitt durch das zwischen einem Grundkörper der Stellvorrichtung und dem Elemententräger angeordnete Kugelgelenk,

Fig. 2 einen Schnitt und eine Draufsicht auf die mit dem Elemententräger verbundene Gelenkkugel,

Fig. 3 einen Schnitt und eine Draufsicht auf die mit dem Grundkörper verbundene Gelenkpfanne, und

Fig. 4 eine zwischen Gelenkkugel und Gelenkpfanne angeordnete, kalottenförmige Schale in Draufsicht, in zwei Schnittdarstellungen und in einer Ansicht von unten.

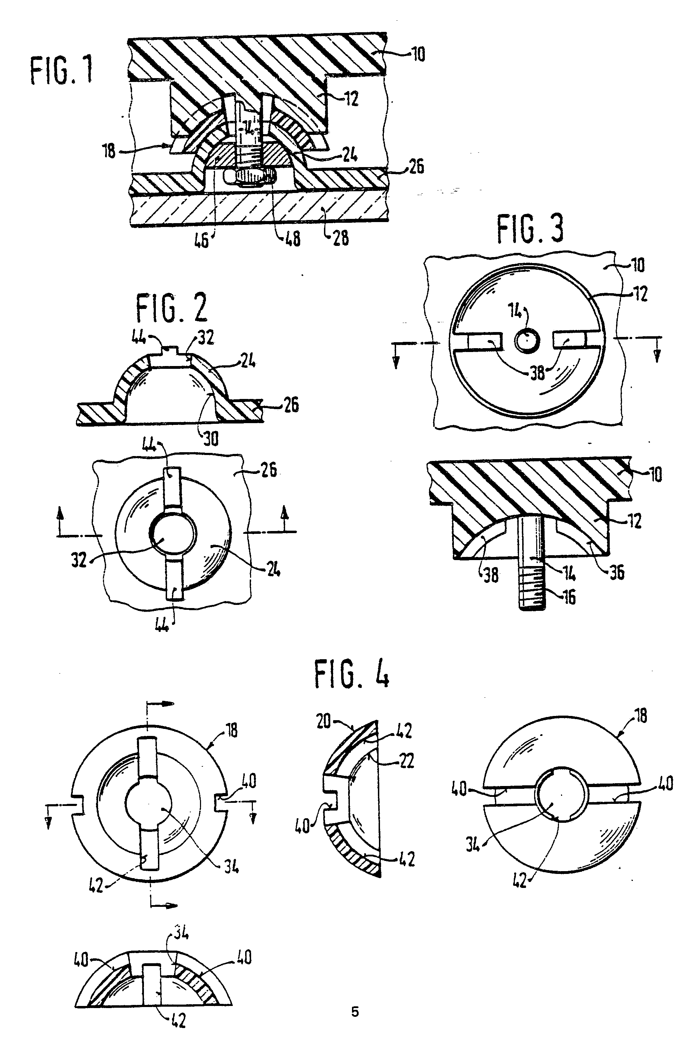

An einem zur Stellvorrichtung gehörenden Grundkörper 10 ist eine Kugel- oder Lagerpfanne 12 angeordnet, die einen zum Pfannenzentrum gerichteten Stehbolzen 14 aufweist. Der Stehbolzen 14 ist an seinem freien Endabschnitt mit einem Bolzengewinde 16 versehen. Wie insbesondere aus Fig. 1 ersichtlich ist, ist in der Lagerpfanne 12 eine kalottenförmige Schale 18 angeordnet, deren konvexe Oberfläche 20 dem Radius der Lagerpfanne 12 angepasst ist. Die innere, konkave Oberfläche 22 der kalottenförmigen Schale 18 ist auf den Radius einer Gelenkkugel 24 abgestimmt, die einstückig mit einem Elemententräger 26 verbunden ist. Auf dem Elemententräger 26 ist im Ausführungsbeispiel ein Spiegel 28 befestigt, der als Rückspiegel eines Kraftfahrzeugs Verwendung findet. Die etwa als Halbkugel ausgebildete Gelenkkugel 24 des Elemententrägers 26 ist mit einer Höhlung 30 versehen, so dass die Gelenkkugel durch eine halbkugelförmig gekrümmte Wand gebildet ist. Diese halbkugelförmig gekrümmte Wand 24 ist in ihrem Zentralbereich mit einem Durchbruch 32 ausgestattet, welcher im zusammengebauten Zustand den Druchtritt des Stehbolzens 14 erlaubt. Die in Fig. 4 als Einzelteil dargestellte kalottenförmige Schale 18 ist bei zusammengebauter Stellvorrichtung (Fig. 1) zwischen der Gelenkkugel 24 und der Lagerpfanne 12 angeordnet. Sie weist in ihrem zentralen Bereich eine Durchbrechung 34 auf, in welcher sie, bei zusammengebauter Stellvorrichtung, ebenfalls von dem Stehbolzen 14 der Lagerpfanne 12 durchdrungen ist. Wie insbesondere Fig. 3 zeigt, weist die Lagerpfanne an ihrer konkaven Innenfläche 36 zwei miteinander fluchtende Vorsprünge 38 auf, welche bei zusammengebauter Stellvorrichtung (Fig. 1) in Führungsnuten 40 greifen, welche in der konvexen Oberfläche 20 der Schale 18 angeordnet sind. Die Schale 18 kann also gegenüber der Lagerpfanne 12 nur in Erstreckungsrichtung der spiellos in den Führungsnuten 40 geführten Vorsprünge 38 geschwenkt werden. Weiter ist die kalottenförmige Schale 18 an ihrer inneren, konkaven Wandfläche 22 ebenfalls mit zwei miteinander fluchtenden Führungsnuten 42 versehen, die im zusammengebauten Zustand mit Vorsprüngen 44 der Kugel 24 zusammenarbeiten. Die Vorsprünge 44 sind ebenfalls spiellos auf die Führungsnuten 42 der Schale 18 abgestimmt. Die Führungsnuten 40 und 42 sind in Ebenen angeordnet, die sich unter einem Winkel von 90° schneiden. Die Schale 18 kann gegenüber der Kugel 24 nur in Richtung der Führungsnuten 42 bzw. der Vorsprünge 44 geschwenkt werden. Eine Verstellung des Elemententrägers 26 gegenüber dem Grundkörper ist also einmal in Richtung der Vorsprünge 38 und zum anderen in Richtung der Vorsprünge 44 möglich. Diese beiden Bewegungen können auch gleichzeitig in sich überlagernder Form stattfinden.

Wie Fig. 1 zeigt, durchdringt in zusammengebautem Zustand der Stellvorrichtung der Stehbolzen 14 die Durchbrechung 34 der Schale 18 und den Durchbruch 32 der Gelenkkugel 24. Das mit dem Gewinde 16 versehene freie Ende des Stehbolzens 14 ragt in die Höhlung 30 der Gelenkkugel 24. In dieser Gelenkkugel ist eine kugelzonenförmige Scheibe 46 mit einer Zentralbohrung angeordnet, die ebenfalls von dem Stehbolzen 14 durchdrungen ist. Das freie Ende des Stehbolzens 14 ragt auf der von der Gelenkkugel 24 abgewandten Seite der Scheibe 46 aus dieser heraus und ist mit einer Gewindemutter 48 versehen. Die Gewindemutter 48 hält über die Scheibe 46 und den Stehbolzen 14 die Vorsprünge 38 der Lagerpfanne und die Vorsprünge 44 der Gelenkkugel 24 mit den Führungsnuten 40, 44 der kalottenförmigen Schale 18 in Eingriff. Der Grundkörper 10 mit der Lagerpfanne 12 ist, ebenso wie die kalottenförmige Schale 18 und der Elemententräger 26, mit der Gelenkkugel 24 aus einem Kunststoff gefertigt.

Das als Schwenklager ausgebildete Kugelgelenk 12, 18, 24 ist also mit Führungsmitteln versehen, welche Schwenkbewegungen um zwei zueinander senkrechte Achsen zulassen. Die Führungsmittel sind durch die Vorsprünge 38 und 44 sowie die mit diesen zusammenwirkenden Führungsnuten 40 und 42 gebildet.

## Patentansprüche

1. Vorrichtung zum Verstellen eines an einem Kraftfahrzeug schwenkbar gelagerten Elements (28), beispielsweise eines Rückspiegels, oder dgl., mit einem Grundkörper (10) mit einer als Kugelgelenk ausgebildeten Lagerstelle (12) für einen das Element (28) aufnehmenden Träger (26) und mit einer Zwangsführung, welche die Schwenkbewegung des Trägers (26) auf zwei zueinander senkrechte Schwenkachsen begrenzt, dadurch gekennzeichnet, dass als Zwangsführung zwischen der Kugel (24) und der Lagerpfanne (12) eine kalottenförmige Schale (18) angeordnet ist, die einerseits mit der Kugel (24) und andererseits mit der Lagerpfanne (12) über Führungsmittel (38, 40 bzw. 42, 44) wirkverbunden ist, welche die Schwenkbewegungen um die zwei zueinander senkrechten Achsen zulassen.

2. Stellvorrichtung nach Anspruch 1, dadurch gekennzeichnet, dass die Führungsmittel durch Führungsnuten (40, 42) in dem einen Bauelement (18) gebildet sind, in denen Vorsprünge (38, 44) des anderen Bauteils (12 bzw. 24) verschiebbar sind.

3. Stellvorrichtung nach Anspruch 2, dadurch gekennzeichnet, dass die kalottenförmige Schale (18) an ihrer konvexen Oberfläche (20) eine einen Vorsprung (38) der Lagerpfanne (12) aufnehmende Führungsnut (40) aufweist.

4. Stellvorrichtung nach einem der Ansprüche 2 oder 3, dadurch gekennzeichnet, dass die kalottenförmige Schale (18) an ihrer konkaven Oberfläche (22) eine einen Vorsprung (44) der Kugel (24) aufnehmende Führungsnut (42) hat.

5. Stellvorrichtung nach Anspruch 4, dadurch gekennzeichnet, dass die Führungsnuten (40 bzw. 42) in senkrecht aufeinanderstehenden Ebenen angeordnet sind.

6. Stellvorrichtung nach einem der Ansprüche 1 bis 5, dadurch gekennzeichnet, dass die Gelenkkugel (24) auf ihrer von der Lagerpfanne (12) abgewandten Seite mit einer Höhlung (30) versehen ist und die so gebildete Wand einen Durchbruch (32) aufweist.

7. Stellvorrichtung nach Anspruch 6, dadurch gekennzeichnet, dass in der Höhlung (30) eine kugelzonenförmige Scheibe (46) mit einer Zentralbohrung angeordnet ist.

8. Stellvorrichtung nach einem der Ansprüche 1 bis 7, dadurch gekennzeichnet, dass die Lagerpfanne (12) einen zum Kugelzentrum gerichteten Stehbolzen (14) aufweist, der am freien Ende ein Gewinde (16) hat.

9. Stellvorrichtung nach einem der Ansprüche 1 bis 8, dadurch gekennzeichnet, dass das Kugelgelenk (12, 18, 24), insbesondere die kalottenförmige Schale (18), aus Kunststoff gefertigt ist.

## Claims

1. Device for adjusting an element (28) mounted pivotably on a motor vehicle, for example a rear-view mirror or the like, having a basic body (10) with a bearing (12) designed as a ball-and-socket joint and intended for a carrier (26) receiving the element (28), and with a restraint which limits the pivoting movement of the carrier (26) to two pivot axes perpendicular to one another, characterised in that there is provided as a restraint between the ball (24) and the socket (12) a cup-shaped shell (18) connected operatively, on the one hand, to the ball (24) and, on the other hand, to the socket (12) via guide means (38, 40 and 42, 44 respectively) which allow pivoting movements about the two axes perpendicular to one another.

2. Adjusting device according to Claim 1, characterised in that the guide means are formed by guide grooves (40, 42) which are located in one component (18), and in which projections (38, 44) of the other component (12 or 24) are displaceable.

3. Adjusting device according to Claim 2, characterised in that the cup-shaped shell (18) has on its convex surface (20) a guide groove (40) receiving a projection (38) of the socket (12).

4. Adjusting device according to one of Claims 2 or 3, characterised in that the cup-shaped shell (18) has on its concave surface (22) a guide groove (42) receiving a projection (44) of the ball (24).

5. Adjusting device according to Claim 4, characterised in that the guide grooves (40 and 42) are arranged in planes perpendicular to one another.

6. Adjusting device according to one of Claims 1 to 5, characterised in that the ball (24) is provided with a cavity on its side facing away from the socket (12), and the wall formed in this way has a perforation (32).

7. Adjusting device according to Claim 6, characterised in that a disc (46) in the form of a spherical segment and having a central bore is arranged in the cavity (30).

8. Adjusting device according to one of Claims 1 to 7, characterised in that the socket (12) possesses a stud bold (14) which is directed towards the ball centre and which has a thread (16) at the free end.

9. Adjusting device according to one of Claims 1 to 8, characterised in that the ball-and-socket joint (12, 18, 24), especially the cup-shaped shell (18), is made of plastic.

## Revendications

1. Dispositif pour régler un élément (28) articulé à un véhicule automobile, par exemple un rétroviseur, ou un élément analogue comportant un corps de base (10) avec un point d'appui (12) constitué par une articulation à rotule, pour un support (26) recevant l'élément (28) et avec un guidage forcé qui limite le dépassement de pivotement du support (26) sur deux axes de pivotement perpendiculaires l'un à l'autre, dispositif caractérisé en ce qu'une coquille en forme de calotte (18) est disposée pour jouer le rôle de guidage forcé entre la rotule (24) et la crapaudine (12), cette coquille étant reliée fonctionnellement, d'une part, à la rotule (24) et, d'autre part, à la crapaudine (12) par l'intermédiaire de moyens de guidage (38, 40 ou bien 42, 44), qui permettent les déplacements de pivotement autour des deux axes perpendiculaires l'un à l'autre.

2. Dispositif de réglage selon la revendication 1, caractérisé en ce que les moyens de guidage sont constitués par des rainures de guidage (40, 42) dans l'un des éléments constitutifs (18), rainures dans lesquelles peuvent se déplacer des saillies (38, 44) de l'autre partie constitutive (12 ou bien 24).

3. Dispositif de réglage selon la revendication 2, caractérisé en ce que la coquille en forme de calotte (18) comporte sur sa surface convexe (20) une rainure de guidage (40) recevant une saillie (38) de la crapaudine (12).

4. Dispositif de réglage selon l'une des revendications 2 ou 3, caractérisé en ce que la coquille en forme de calotte (18) comporte sur sa surface concave (22) une rainure de guidage (42) recevant une saillie (44) de la rotule (24).

5. Dispositif de réglage selon la revendication 4, caractérisé en ce que les rainures de guidage (40 ou bien 42) sont disposées dans des plans perpendiculaires l'un à l'autre.

6. Dispositif de réglage selon l'une des revendications 1 à 5, caractérisé en ce que la rotule d'articulation (24) sur son côté opposé à la crapaudine (12) est pourvue d'un creux (30) et que la paroi ainsi formée comporte un ajour (32).

7. Dispositif de réglage selon la revendication 6, caractérisé en ce qu'un disque (46), en forme de zone sphérique et comportant un perçage central, est disposé dans le creux (30).

8. Dispositif de réglage selon l'une des revendications 1 à 7, caractérisé en ce que la crapaudine (12) comporte un axe fixe (14) orienté vers le centre de la rotule et qui a, à son extrémité libre, un filetage (16).

9. Dispositif de réglage selon l'une des revendications 1 à 8, caractérisé en ce que l'articulation à rotule (12, 18, 24), et notamment la coquille en forme de calotte (18), est réalisée en matière plastique.

FIG. 1

FIG. 2

FIG. 3

FIG. 4